# FASCICULE DE BREVET EUROPEEN

(11) **EP 2 405 156 B1**
(45) Date de publication et mention de la délivrance du brevet: **26.12.2012**
(21) Numéro de dépôt: 11290294.5
(22) Date de dépôt: 29.06.2011
(51) Int. Cl.: F16H 3/10, F16H 61/02, B60K 6/383, B60K 6/48, B60K 6/547, B60K 6/387

(54) **Dispositif de transmission de vitesse pour un véhicule automobile de type hybride**
Getriebe für Hybridkraftfahrzeug
Speed transmission device for a hybrid motor vehicle

(30) Priorité: 08.07.2010 FR 1002876
(43) Date de publication de la demande: 11.01.2012
(73) Titulaire: IFP Energies nouvelles, 92852 Rueil-Malmaison Cedex (FR)
(72) Inventeur: Venturi, Stéphane, 07100 Roiffieux (FR)

(56) Documents cités:
- EP-A1- 0 445 873
- EP-A1- 2 014 499
- WO-A1-03/100298
- WO-A1-2005/007504
- DE-A1- 4 212 324
- FR-A1- 2 811 395

## Description

La présente invention se rapporte à un dispositif de transmission de vitesse pour le déplacement d'un véhicule automobile de type hybride.

Comme cela est bien connu, ce type de véhicule combine, comme moyen de propulsion ou de traction, un moteur thermique, généralement à combustion interne, et une machine électrique rotative reliée à une source électrique, telle qu'un ou plusieurs accumulateurs électriques.

Cette combinaison permet d'optimiser les performances de ce véhicule, notamment en diminuant la consommation en carburant de l'ensemble du dispositif, tout en préservant l'environnement par des rejets limités de polluants dans l'atmosphère.

Le document FR 2 811 395 décrit un dispositif selon le préambule de la revendication 1.

Dans l'exemple décrit dans le document FR 2 811 395, ce type de véhicule comprend un dispositif de transmission de vitesse avec une ligne primaire motrice placée sensiblement parallèlement à une ligne secondaire réceptrice qui contrôle les roues motrices de ce véhicule. La ligne primaire est constituée, d'une part, d'un arbre menant principal entraîné en rotation par le moteur thermique au travers d'un accouplement débrayable et, d'autre part, d'un arbre menant auxiliaire tubulaire entraîné en rotation par le moteur électrique et entourant l'arbre menant principal. L'arbre menant principal et l'arbre menant auxiliaire peuvent être reliés à rotation l'un à l'autre par un crabot. Chacun de ces arbres porte, de manière fixe, deux roues dentées qui sont chacune en prise avec des roues dentées réceptrices portées par la ligne secondaire réceptrice en étant montées folles sur cette ligne. Cette ligne porte également des baladeurs à débattement alternatif qui permettent de rendre solidaires en rotation les roues dentées réceptrices avec cette ligne secondaire.

Ainsi en fonctionnement, le véhicule est entrainé en déplacement à différentes vitesses, soit par le moteur électrique, soit par le moteur thermique ou par les deux. Ceci se réalise en agissant sur les différents accouplements (accouplement débrayable et/ou crabot et/ou baladeurs) que portent les différentes lignes pour solidariser l'arbre menant principal avec le moteur thermique et/ou cet arbre menant principal avec l'arbre menant auxiliaire et/ou une des roues dentées réceptrices avec la ligne secondaire réceptrice.

Ce dispositif de transmission bien que donnant satisfaction présente néanmoins des inconvénients non négligeables.

En effet, lorsque seul le moteur électrique est utilisé pour entraîner le véhicule, il est nécessaire de procéder à l'accouplement de la roue réceptrice avec la ligne secondaire de façon à transmettre le mouvement de rotation de ce moteur électrique à cette ligne secondaire. Ceci a pour effet de nécessiter une complication de ce dispositif pour réaliser une fonction basique.

De plus, le véhicule doit comporter une multiplicité d'actionneurs pour commander l'accouplement débrayable, le crabot et les baladeurs. Ces actionneurs augmentent le coût de réalisation du dispositif et peuvent être la source de pannes et/ou de dysfonctionnements.

En outre, ces actionneurs doivent être contrôlés par une unité de calcul, comme le calculateur que comporte habituellement le moteur, ce qui nécessite d'augmenter la capacité de ce calculateur.

Enfin, il est nécessaire, pour obtenir la vitesse souhaitée, d'accoupler ou de désaccoupler certains éléments du dispositif, comme les roues dentées réceptrices. Ceci a pour effet d'allonger le temps de passage d'une vitesse à une autre en entrainant un inconfort de conduite.

La présente invention se propose de remédier aux inconvénients mentionnés ci-dessus grâce à un dispositif de transmission de vitesse de réalisation simple et peu coûteux.

De plus, un tel dispositif permet d'utiliser indépendamment l'une ou l'autre des motorisations toute en ayant la possibilité de récupérer de l'énergie à la décélération du véhicule

A cet effet, l'invention concerne un dispositif de transmission de vitesse pour véhicule automobile de type hybride comportant un arbre premier de transmission relié à un moteur thermique au travers d'un accouplement débrayable et portant au moins deux roues dentées premières coopérant avec au moins deux roues dentées deuxièmes portées par un arbre secondaire de transmission relié à un arbre d'essieu du véhicule et à une machine électrique, caractérisé en ce que l'une des roues dentées deuxièmes est portée par l'arbre secondaire au travers d'un accouplement unidirectionnel.

L'autre des roues dentées deuxièmes peut être montée folle en rotation sur l'arbre secondaire et est reliée audit arbre au travers d'un accouplement débrayable.

Les roues dentées premières et les roues dentées deuxièmes peuvent former deux trains d'engrenages avec des rapports de vitesses différents.

De manière avantageuse, l'accouplement unidirectionnel peut être une roue libre.

Préférentiellement, l'accouplement débrayable peut être un embrayage centrifuge.

La machine électrique peut être reliée à l'arbre d'essieu par une voie multiplicatrice de transmission de mouvement.

Le dispositif peut comprendre un arbre intercalaire placé entre l'arbre premier et l'arbre secondaire et portant des roues dentées intercalaires coopérant avec les roues desdits arbres premier et secondaire.

L'une des roues dentées intercalaires peut coopérer avec l'une des roues dentées de l'arbre premier et peut être portée par l'arbre intercalaire au travers d'un accouplement unidirectionnel.

Une autre des roues dentées intercalaires peut coopérer avec une autre des roues dentées de l'arbre premier et peut être portée librement sur l'arbre intercalaire en étant reliée audit arbre au travers d'un accouplement débrayable.

Les autres caractéristiques et avantages de l'invention vont apparaître maintenant à la lecture de la description qui va suivre, donnée à titre uniquement illustratif et non limitatif, et à laquelle sont annexées :
- la figure 1 qui est un schéma montrant le dispositif de transmission de vitesse pour le déplacement d'un véhicule automobile de type hybride selon l'invention,
- la figure 2 qui montre ce dispositif avec une autre configuration de fonctionnement,
- la figure 3 qui est un schéma illustrant une variante du dispositif de transmission de vitesse de la figure 1 et
- la figure 4 qui est un schéma d'une autre variante du dispositif de transmission de vitesse des figures 1 et 2.

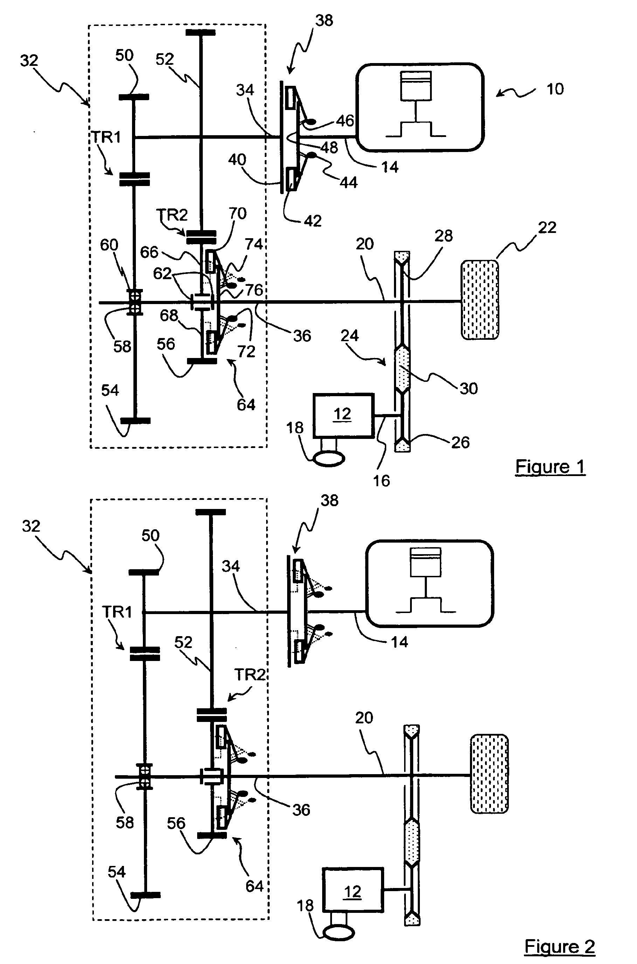

Comme illustré sur la figure 1, le système d'entraînement en déplacement d'un véhicule hybride comprend un moteur thermique 10, notamment un moteur à combustion interne, et une machine électrique 12 pouvant fonctionner en mode moteur électrique ou en mode génératrice d'énergie. Le moteur thermique 10 comprend un arbre d'entraînement de moteur 14 issu d'un prolongement du vilebrequin et qui est commandé en rotation par ce moteur. La machine électrique comprend également un arbre d'entraînement 16, ici le rotor de cette machine, et est reliée à des accumulateurs électriques 18 (ou batteries).

Ce système comprend également un arbre d'essieu 20 qui entraîne les roues 22 du véhicule, directement ou par l'intermédiaire d'un pont différentiel.

Cet arbre d'essieu est relié par une voie multiplicatrice de transmission de mouvement 24 au rotor 16 de la machine électrique. A titre d'exemple, cette voie comprend une poulie 26 montée sur le rotor, une autre poulie 28 de diamètre différent montée sur l'arbre d'essieu et une courroie 30 reliant cinématiquement les deux poulies.

Bien entendu, cette voie de transmission peut comporter tous autres éléments assurant la transmission de mouvement de rotation entre le rotor et l'arbre d'essieu, comme des roues dentées par exemple.

Enfin, ce système comprend un dispositif de transmission de vitesse 32, désigné dans la suite de la description sous le vocable de boîte de vitesse, qui est disposé entre l'arbre 14 du moteur à combustion interne et l'arbre d'essieu 20.

Cette boite de vitesse comprend un arbre premier 34 placé dans le prolongement de l'arbre de moteur 14 et un arbre secondaire 36 situé sensiblement parallèlement à l'arbre premier et solidaire en rotation de l'arbre d'essieu 20.

L'arbre premier 34 est relié à l'arbre de moteur 14 au travers d'un accouplement débrayable 38. A titre d'exemple, cet accouplement est un embrayage centrifuge dont le plateau de réaction 40 est porté fixement par une extrémité de l'arbre premier et dont le plateau de friction 42, contrôlé en déplacement axial par des masselottes 44 et des ressorts de rappel 46, est porté par un plateau 48 relié fixement à l'extrémité libre de l'arbre de moteur 14. De ce fait, sous l'impulsion de la rotation de cet arbre de moteur 14, le plateau de friction est déplacé en translation axiale sous l'effet du mouvement centrifuge des masselottes pour être relié au plateau de réaction 40 par contact avec ce dernier.

Cet arbre premier porte fixement en translation et en rotation au moins deux roues dentées de diamètres différents, ici une roue dentée de petit diamètre 50 (ou petite roue dentée) située au voisinage de l'extrémité libre de l'arbre premier et une roue dentée 52 (ou grande roue dentée) de plus grand diamètre que la roue 50 placée du côté du plateau de réaction. Pour des raisons de simplification dans la suite de la description, ces roues dentées sont dénommées roues dentées premières.

Ces roues dentées premières engrènent avec des roues dentées de différents diamètres portées par l'arbre secondaire 36 solidaire de l'arbre d'essieu 20. Ainsi, une roue dentée de grand diamètre 54 coopère avec la petite roue dentée 50 et une roue dentée de petit diamètre 56 engrène avec la grande roue dentée première 52. De même, pour des raisons de simplification, ces roues dentées 54 et 56 sont dénommées roues dentées deuxièmes.

Ainsi, il est formé deux trains d'engrenage, un premier TR1 avec les roues dentées 50, 54 et un deuxième TR2 avec les roues dentées 52, 56 chacun de ces trains ayant des rapports de vitesse différents R1, R2.

La roue dentée deuxième de grand diamètre 54 est placée sur l'arbre secondaire 36 en y interposant un accouplement unidirectionnel, comme une roue libre 58, entre le palier 60 de cette roue dentée et cet arbre.

La roue dentée deuxième de petit diamètre 56 est montée folle sur l'arbre 36 en y étant immobilisée en translation axiale par des butées fixes 62. Cette roue dentée peut être solidarisée en rotation avec cet arbre par l'intermédiaire d'un accouplement débrayable 64.

A titre d'exemple, cet accouplement est un accouplement centrifuge semblable à celui placé entre l'arbre de moteur 14 et l'arbre premier 34 de la boîte de vitesse 32. Plus précisément, cet accouplement comprend une surface de liaison 66 formée par une partie du voile 68 de la roue dentée 56 et un plateau de friction 70 en regard de cette surface de liaison. Ce plateau de friction est contrôlé en déplacement axial par un ensemble de masselottes 72 et de ressorts 74 qui sont portés par un plateau 76 relié fixement à l'arbre secondaire 36. Par cela, lors de la rotation de l'arbre 36 et sous l'effet du mouvement centrifuge des masselottes, le plateau de friction est déplacé en translation axiale en direction du voile 68 jusqu'a être au contact avec la surface 66. Ceci permet donc d'établir ainsi une liaison à rotation entre l'arbre 36 et la roue dentée 56.

Il va être maintenant décrit les différentes configurations de fonctionnement.

Dans une première étape, il est fait mention du mode électrique de traction (ou de propulsion) du véhicule hybride où seule la machine électrique 12 est utilisée en tant que moteur d'entraînement du véhicule.

Dans ce mode et en se référant à la figure 1, les accouplements 38 et 64 sont en position débrayée et le moteur électrique 12 est alimenté par les batteries 18 en générant la rotation du rotor 16.

Ce rotor transmet son mouvement de rotation à l'arbre d'essieu 20, et par conséquent à l'arbre secondaire 36, par la voie de transmission de mouvement 24 qui l'amplifie.

La rotation de l'arbre d'essieu est transmise directement ou indirectement aux roues 22 du véhicule pour réaliser le déplacement de ce véhicule.

Simultanément, la rotation de l'arbre secondaire 36 entraîne en rotation l'embrayage centrifuge 64 qui reste en position débrayé, jusqu'à une vitesse de rotation seuil Nr de cet arbre. Par cela, la roue dentée deuxième de petit diamètre 56 reste folle sur cet arbre sans entraîner la grande roue dentée première 52.

Ceci s'applique lorsque le moteur électrique est actionné avec un premier sens de rotation du rotor 16 pour entrainer le véhicule en marche avant. Dans cette configuration, la roue dentée de grand diamètre 54 n'est pas entraînée en rotation par la roue libre 58, qui est dans ce cas dans le sens glissant. Ainsi, toutes les roues dentées premières et deuxièmes 50, 52, 54 et 56 de la boîte de vitesse 32 sont à l'arrêt.

Pour la marche arrière, le rotor 16 du moteur électrique est commandé en rotation dans un sens inverse avec une vitesse de rotation inferieure à la valeur seuil Nr et les accouplements 38 et 64 restent en position débrayée.

Par cela, la roue dentée deuxième de grand diamètre 54 est entrainée en rotation par la roue libre 58 qui lui transmet le mouvement de rotation de l'arbre secondaire 36. Ce mouvement de rotation est transmis à l'arbre premier 34 par engrènement de la roue dentée 54 avec la petite roue dentée première 50. La rotation de l'arbre 34 entraîne la rotation de la grande roue dentée 52 qui engrène avec la roue dentée deuxième 56, qui est montée folle sur l'arbre 36, sans entrainer en rotation cet arbre 36.

De plus, compte tenu de la position débrayée de l'embrayage centrifuge 38, la rotation de l'arbre premier 34 n'est pas retransmise à l'arbre d'entrainement 14 du moteur à combustion interne.

En revenant à la configuration pour l'entrainement en marche avant du véhicule avec le rotor 16 tournant dans le premier sens de rotation, dès que la vitesse de rotation de l'arbre d'essieu, ou de l'arbre secondaire auquel il est lié, dépasse la valeur seuil Nr, l'embrayage centrifuge 64 est opérationnel en reliant à rotation l'arbre secondaire 36 à la roue dentée deuxième de petit diamètre 56, comme illustré en traits pointillés sur la figure.

Dans cette configuration, la roue dentée 56 de l'arbre secondaire 36 engrène avec la grande roue dentée première 52 qui entraine en rotation l'arbre premier 34. Cette rotation est ensuite transmise à la roue 50 qui engrène avec la grande roue dentée 54. Compte tenu du différentiel de vitesses de rotation entre l'arbre secondaire 36 et la roue dentée 54 provenant des rapports différents R1 et R2 entre les trains d'engrenages TR1 et TR2 ainsi que par la présence de la roue libre 58, l'arbre 36 n'est pas entraîné en rotation par la roue 54. Cela provient du fait que la vitesse de rotation de l'arbre secondaire 36 est supérieure à la vitesse de rotation de la grande roue dentée 54.

Ainsi, il est possible de déplacer le véhicule, soit en marche avant sur toute la plage d'utilisation du moteur électrique, soit en en marche arrière sur une plage d'utilisation de ce moteur allant d'une vitesse de rotation supérieur à 0 jusqu'à une vitesse de rotation de l'arbre secondaire 36 inférieure à la valeur seuil Nr.

De plus, lors des phases de décélération et/ou de freinage du véhicule, la récupération d'énergie électrique est maximisée. La machine électrique 12 est utilisée en tant que génératrice de courant pour recharger les batteries 18.

Dans le mode thermique de traction (ou de propulsion) du véhicule hybride qui va être maintenant décrit, le moteur à combustion interne 10 est utilisé en tant que moteur d'entrainement du véhicule.

Comme illustré sur la figure 2, à l'état de repos, aucun des deux embrayages centrifuges 38 et 64 n'est opérationnel.

Dès que la vitesse de rotation Nv de l'arbre de moteur 14 atteint une valeur seuil, l'embrayage centrifuge 38 est opérationnel en reliant cinématiquement l'arbre 14 à l'arbre premier 34 de la boite de vitesse 32, comme illustré sur la figure en traits pointillés.

Les roues dentées premières 50 et 52 sont entrainées en rotation à la même vitesse que l'arbre 14.

La petite roue dentée première 50 engrène donc avec la roue dentée deuxième de grand diamètre 54, qui elle-même entraîne en rotation, au travers de la roue libre 58, l'arbre secondaire 36 et l'arbre d'essieu 20.

La grande roue dentée première 52 coopère à engrènement avec la roue dentée deuxième de petit diamètre 56.

Si la vitesse de l'arbre secondaire 36, entrainée en rotation par le train d'engrenage TR1, est inférieure à la vitesse Nr précédemment mentionnée, l'accouplement centrifuge 64 reste en position débrayée. Par cela, la roue dentée de petit diamètre 56 reste folle sur l'arbre 36 et la rotation par engrènement avec la grande roue dentée 52 n'a aucun effet sur cet arbre.

Ainsi, il est obtenu un premier rapport de vitesse entre le moteur thermique et l'arbre d'essieu par le train d'engrenage TR1.

Dés que la vitesse de rotation de l'arbre 36 dépasse la valeur seuil Nr, l'accouplement centrifuge 64 est actif, comme illustré en pointillés sur la figure, en reliant la roue dentée de petit diamètre 56 à cet arbre. Suite à cela, l'arbre secondaire 36 ainsi que l'arbre d'essieu 20 sont entraînés à une vitesse de rotation par le train d'engrenage TR2.

Dans cette position le train d'engrenage TR1 n'a aucune action sur l'arbre 36 car, compte tenu du différentiel de vitesse de rotation entre la roue dentée de grand diamètre 54 et l'arbre secondaire 36 entrainé par la roue dentée de petit diamètre 56 ainsi que de la présence de la roue libre 58, l'arbre 36 n'est pas entraîné en rotation par la roue 54. Cela puisque la vitesse de rotation de l'arbre secondaire est supérieure à la vitesse de la grande roue dentée 54.

Dans cette autre configuration, le véhicule est donc entraîné en déplacement selon un deuxième rapport de vitesse provenant du train d'engrenage TR2.

Il est à noter que, dans ces deux configurations, il est toujours possible de recharger les batteries 18 du véhicule en utilisant la machine électrique 12 en tant que génératrice.

De même, cette machine électrique peut être utilisée pour récupérer, en totalité ou en partie de l'énergie, soit lors des phases de décélération du véhicule soit en phase de freinage, en utilisant cette machine en tant que génératrice pour les batteries.

Il est à noter que dans le cas de l'entrainement du véhicule par le moteur thermique 10 et lors de la phase de décélération de ce véhicule, l'énergie est récupérable en totalité, uniquement au travers du premier train TR1, puisque la roue libre 58 permet de désaccoupler le moteur thermique 10 de l'arbre secondaire 36 et de l'essieu 20.

Lorsque le second train TR2 est utilisé, le moteur thermique est constamment accouplé à l'essieu et une partie de l'énergie peut être récupérée en phase de décélération du véhicule puisque une autre partie de l'énergie est utilisée pour réaliser le "frein moteur" du moteur thermique.

Il peut également être noté que, dans le mode thermique de traction, il peut être combiné l'utilisation de ce moteur thermique avec celle du moteur électrique, les deux puissances s'accumulant pour entrainer le véhicule.

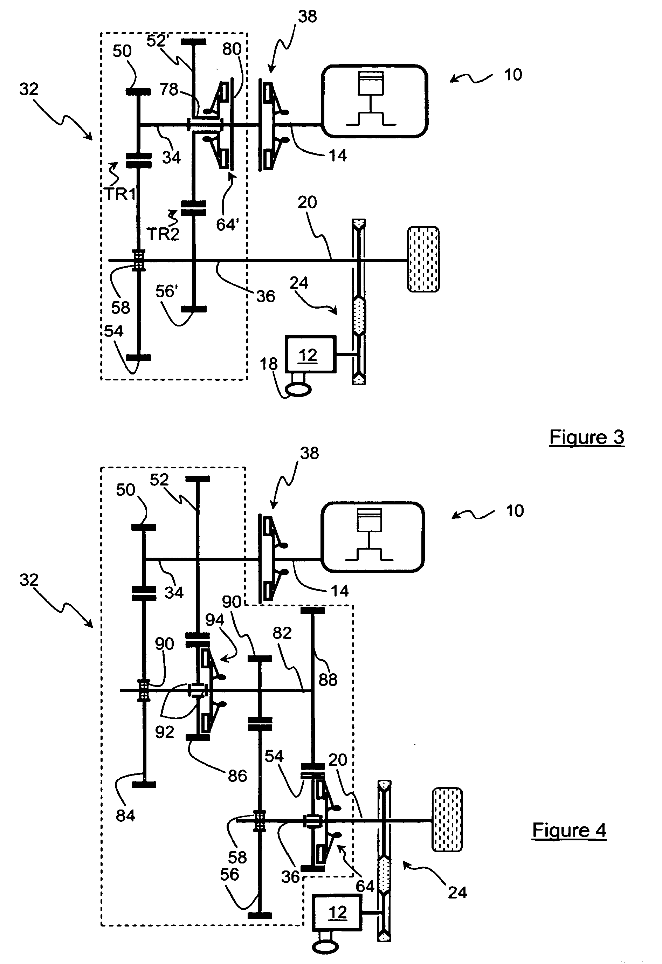

La variante de la figure 3 se distingue de la figure 1 par le fait que la grande roue dentée première 52' est montée folle en rotation par un moyeu 78 sur l'arbre premier 34 mais fixe en translation axiale, que l'embrayage centrifuge (référencé 64'), placé initialement sur l'arbre 36, est maintenant placé sur le moyeu de cette grande roue dentée pour la solidariser, à partir d'une vitesse de rotation de la grande roue dentée 52 supérieure à vitesse de rotation Nr précédemment mentionnée, avec l'arbre 36 au travers d'un plateau 80 porté par l'arbre premier, et que la roue dentée deuxième de petit diamètre 56' est montée fixe sur l'arbre secondaire 36.

Cette variante permet d'obtenir les mêmes configurations de vitesses que celle décrite en relation avec les figures 1 et 2.

Ainsi, l'on obtient un premier rapport de vitesse au travers des roues dentées 50, 54 pour une vitesse de rotation de l'arbre de moteur 14 et de l'arbre premier 36 supérieur à la vitesse Nv et un deuxième rapport par les roues 52' et 56' lorsque la vitesse de rotation de la roue dentée 52' atteint une vitesse de rotation Nr' permettant d'actionner l'embrayage centrifuge 64'.

Dans le cas de la figure 4, qui est un variante issue des figures 1 et 2, il est prévu de placer un arbre intercalaire de transmission 82 entre l'arbre premier 34 et l'arbre secondaire 36 tout en étant parallèle à ces arbres de façon à obtenir un transmission supérieure à deux rapports.

Cet arbre intercalaire porte quatre roues dentées intercalaires, deux roues dentées 84 et 86 coopérant avec les roues dentées 50 et 52 de l'arbre premier avec des diamètres en correspondance et deux roues dentées 88 et 90 coopérant avec les roue dentées 54 et 56 de l'arbre secondaire 36 avec également des diamètres en correspondance.

Avantageusement, la roue dentée intercalaire de grand diamètre 84, qui coopère avec la roue dentée première de petit diamètre 50, est montée sur l'arbre intercalaire en y interposant un accouplement unidirectionnel, comme une roue libre 92. La roue dentée intercalaire 86, qui est de petit diamètre par rapport à la roue 84, est montée folle sur l'arbre intercalaire 82 et est immobilisée en translation axiale sur cet arbre par des butées fixes 92. Comme illustré sur la figure 4, la roue dentée intercalaire 86 peut être solidarisée en rotation avec l'arbre l'intercalaire grâce à un accouplement débrayable 94 lorsque la vitesse de rotation de cette arbre atteint une vitesse Ns. De manière préférentielle, cet accouplement 94 est un accouplement centrifuge semblable à l'accouplement 64 placé entre l'arbre secondaire 36 et la roue dentée secondaire 56 et comprend pour cela les mêmes éléments.

Les deux autres roues dentées de cet arbre intercalaire sont une roue de grand diamètre 88 fixée sur cet arbre et une roue de petit diamètre 90 monté également fixement sur cet arbre. Ces deux roues coopèrent respectivement avec les roues de petit diamètre secondaire 54 et de grand diamètre secondaire 56, comme déjà décrit en relation avec les figures 1 et 2.

Pour, le fonctionnement de ce dispositif, il est établi un premier rapport de vitesse, après actionnement de l'embrayage 38, au travers des roues dentées 50, 84, 90 et 56. Ceci se réalise par le fait que les embrayages 94 et 64 ne sont pas actifs et les roues dentées 86 et 54 sont de ce fait inopérantes.

A partir de ce premier rapport il est possible d'obtenir au moins deux autres rapports de vitesses supplémentaires.

Dans le cas où l'embrayage 64 sur l'arbre secondaire 36 est actif en premier lieu, à partir d'une vitesse seuil Vs de cet arbre secondaire 36 généré par les roues dentées 50, 84, 90 et 56, la vitesse de rotation de l'arbre intercalaire 82 est diminué puisque la roue denté 54 entraine la roue 88 et que, sous l'effet du différentiel de vitesse de rotation entre l'arbre intercalaire et l'arbre secondaire, la roue dentée 56 est désolidarisé de cet arbre secondaire. Par cela, il se produit un deuxième rapport de vitesse passant par les roues 50, 84, 88 et 54.

Une fois que l'embrayage 64 est actif, si la vitesse de l'arbre intercalaire continue de croitre, la vitesse de rotation de cet arbre intercalaire va atteindre un régime seuil Rs à partir duquel l'embrayage 92 va se fermer. Cette action aura pour effet de créer une désolidarisation des roues dentées 84 et 56 sous l'effet des roues libres 92 et 58 de par les différentiels de vitesse de rotation entre l'arbre intercalaire 82 et les arbres premier 34 et secondaire 36. Un troisième rapport de vitesse est ainsi établi par les roues dentées 52, 86, 88 et 54.

La présente invention n'est pas limitée à l'exemple de réalisation décrit mais englobe tous variantes couverts par les revendications.

Notamment, il peut être envisagé d'utiliser des accouplements à commande contrôlée en lieu et place des accouplements centrifuges.

## Revendications

1. Dispositif de transmission de vitesse pour véhicule automobile de type hybride comportant un arbre premier de transmission (34) relié à un moteur thermique (10) au travers d'un accouplement débrayable (38) et portant au moins deux roues dentées premières (50, 52) coopérant avec au moins deux roues dentées deuxièmes (54, 56) portées par un arbre secondaire de transmission (36) relié à un arbre d'essieu (20) du véhicule et à une machine électrique (12), **caractérisé en ce que** l'une (54) des roues dentées deuxièmes est portée par l'arbre secondaire au travers d'un accouplement unidirectionnel (58).

2. Dispositif de transmission de vitesse pour véhicule automobile de type hybride selon la revendication 1, **caractérisé en ce que** l'autre (56) des roues dentées deuxièmes est montée folle en rotation sur l'arbre secondaire (36) et est reliée audit arbre au travers d'un accouplement débrayable (64).

3. Dispositif de transmission de vitesse pour véhicule automobile de type hybride selon la revendication 1 ou 2, **caractérisé en ce que** les roues dentées premières et les roues dentées deuxièmes forment deux trains d'engrenages (TR1, TR2) avec des rapports de vitesses différents (R1, R2).

4. Dispositif de transmission de vitesse pour véhicule automobile de type hybride selon la revendication 1, **caractérisé en ce que** l'accouplement unidirectionnel est une roue libre (58).

5. Dispositif de transmission de vitesse pour véhicule automobile de type hybride selon la revendication 2, **caractérisé en ce que** l'accouplement débrayable est un embrayage centrifuge (38, 64).

6. Dispositif de transmission de vitesse pour véhicule automobile de type hybride selon la revendication 1, **caractérisé en ce que** la machine électrique est reliée à l'arbre d'essieu par une voie multiplicatrice de transmission de mouvement (24).

7. Dispositif de transmission de vitesse pour véhicule automobile de type hybride selon la revendication 1, **caractérisé en ce que** le dispositif comprend un arbre intercalaire (82) placé entre l'arbre premier (34) et l'arbre secondaire (36) et portant des roues dentées intercalaires (84, 86, 88, 90) coopérant avec les roues desdits arbres premier et secondaire.

8. Dispositif de transmission de vitesse pour véhicule automobile de type hybride selon la revendication 7, **caractérisé en ce que** l'une (84) des roues dentées intercalaires coopère avec l'une (50) des roues dentées de l'arbre premier et est portée par l'arbre intercalaire au travers d'un accouplement unidirectionnel (92).

9. Dispositif de transmission de vitesse pour véhicule automobile de type hybride selon la revendication 7 ou 8, **caractérisé en ce que** une autre (84) des roues dentées intercalaires coopère avec une autre (52) des roues dentées de l'arbre premier et est portée librement sur l'arbre intercalaire en étant reliée audit arbre au travers d'un accouplement débrayable (94).

## Claims

1. A speed transmission device for a hybrid type motor vehicle comprising a primary transmission shaft (34) connected to a thermal engine (10) through a disengaging coupling (38) and carrying at least two primary toothed wheels (50, 52) cooperating with at least two secondary toothed wheels (54, 56) carried by a secondary transmission shaft (36) connected to an axle shaft (20) of the vehicle and to an electric machine (12), **characterized in that** one (54) of the secondary toothed wheels is carried by the secondary shaft through a one-way coupling (58).

2. A speed transmission device for a hybrid type motor vehicle as claimed in claim 1, **characterized in that** the other (56) secondary toothed wheel is mounted idle in rotation on secondary shaft (36) and it is connected to said shaft through a disengaging coupling (64).

3. A speed transmission device for a hybrid type motor vehicle as claimed in claim 1 or 2, **characterized in that** the primary toothed wheels and the secondary toothed wheels form two gear trains (TR1, TR2) with different gear ratios (R1, R2).

4. A speed transmission device for a hybrid type motor vehicle as claimed in claim 1, **characterized in that** the one-way coupling is a free wheel (58).

5. A speed transmission device for a hybrid type motor vehicle as claimed in claim 2, **characterized in that** the disengaging coupling is a centrifugal clutch (38, 64).

6. A speed transmission device for a hybrid type motor vehicle as claimed in claim 1, **characterized in that** the electric machine is connected to the axle shaft by a motion transmission multiplier track (24).

7. A speed transmission device for a hybrid type motor vehicle as claimed in claim 1, **characterized in that** the device comprises an intercalated shaft (82) arranged between primary shaft (34) and secondary shaft (36), and carrying intercalated toothed wheels (84, 86, 88, 90) cooperating with the wheels of said primary and secondary shafts.

8. A speed transmission device for a hybrid type motor vehicle as claimed in claim 7, **characterized in that** one (84) of the intercalated toothed wheels cooperates with one (50) of the toothed wheels of the primary shaft and it is carried by the intercalated shaft through a one-way coupling (92).

9. A speed transmission device for a hybrid type motor vehicle as claimed in claim 7 or 8, **characterized in that** another one (84) of the intercalated toothed wheels cooperates with another (52) toothed wheel of the primary shaft and it is freely carried on the intercalated shaft while being connected to said shaft through a disengaging coupling (94).

## Patentansprüche

1. Drehzahlübertragungsvorrichtung für Kraftfahrzeug des hybriden Typs, die eine erste Übertragungswelle (34) aufweist, die mit einem Verbrennungsmotor (10) über eine ausrückbare Kupplung (38) verbunden ist und mindestens zwei erste Zahnräder (50, 52) trägt, die mit mindestens zwei zweiten Zahnrädern (54, 56) zusammenwirken, die von einer Übertragungshilfswelle (36), die mit einer Achswelle (20) des Fahrzeugs und einem Elektromotor (12) verbunden ist, getragen wird, **dadurch gekennzeichnet, dass** eines der zweiten Zahnräder (54) von der Hilfswelle über eine unidirektionale Kupplung (58) getragen wird.

2. Drehzahlubertragungsvorrichtung für Kraftfahrzeug des hybriden Typs nach Anspruch 1, **dadurch gekennzeichnet, dass** das andere (56) der zweiten Zahnräder in Drehung frei auf der Hiffswelle (36) montiert und mit der Welle über eine ausrückbare Kupplung (64) verbunden ist.

3. Drehzahlübertragungsvorrichtung für Kraftfahrzeug des hybriden Typs nach Anspruch 1 oder 2. **dadurch gekennzeichnet, dass** die ersten Zahnräder und die zweiten Zahnräder zwei Getriebezüge (TR1, TR2) mit unterschiedlichen Drehzahlverhältnissen (R1, R2) bilden.

4. Drehzahlübertragungsvorrichtung für Kraftfahrzeug des hybriden Typs nach Anspruch 1, **dadurch gekennzeichnet, dass** die unidirektionale Kupplung ein freies Rad (58) ist.

5. Drehzahlübertragungsvorrichtung für Kraftfahrzeug des hybriden Typs nach Anspruch 2, **dadurch gekennzeichnet, dass** die ausrückbare Kupplung eine Zentrifugalkraftkupplung (38, 64) ist.

6. Drehzahlübertragungsvorrichtung für Kraftfahrzeug des hybriden Typs nach Anspruch 1, **dadurch gekennzeichnet, dass** der Elektromotor mit der Achswelle durch einen Multiplikations-Bewegungsübertragungsweg (24) verbunden ist.

7. Drehzahlübertragungsvorrichtung für Kraftfahrzeug des hybriden Typs nach Anspruch 1, **dadurch gekennzeichnet, dass** die Vorrichtung eine Zwischenwelle (82) aufweist, die zwischen die Hauptwelle (34) und die Hilfswelle (36) platziert ist und Zwischenzahnräder (84, 86, 88, 90) trägt, die mit den Rädern der Hauptwelle und der Hilfswelle zusammenarbeiten.

8. Drehzahlübertragungsvorrichtung für Kraftfahrzeug des hybriden Typs nach Anspruch 7, **dadurch gekennzeichnet, dass** eines (84) der Zwischenzahnräder mit einem (50) der Zahnräder der Hauptwelle zusammenarbeitet und von der Zwischenwelle über eine unidirektionale Kupplung (92) getragen wird.

9. Drehzahlübertragungsvorrichtung für Kraftfahrzeug des hybriden Typs nach Anspruch 7 oder 8, **dadurch gekennzeichnet, dass** das andere (84) der Zwischenzahnräder mit einem anderen (52) der Zahnräder der Hauptwelle zusammenarbeitet und frei auf einer Zwischenwelle getragen wird und mit der Welle über eine ausrückbare Kupplung (94) verbunden ist
